(19) **Europäisches Patentamt / European Patent Office / Office européen des brevets**

(11) **EP 3 447 177 B1**

(12) **EUROPEAN PATENT SPECIFICATION**

(45) Date of publication and mention of the grant of the patent:
**25.10.2023 Bulletin 2023/43**

(21) Application number: **17785400.7**

(22) Date of filing: **17.04.2017**

(51) International Patent Classification (IPC):
**C25B 13/08** (2006.01)    **D03D 15/00** (2021.01)
**D01F 6/76** (2006.01)    **D03D 1/00** (2006.01)
**C25B 1/04** (2021.01)    **C25B 9/73** (2021.01)
**D03D 15/283** (2021.01)

(52) Cooperative Patent Classification (CPC):
**C25B 13/08; C25B 1/04; C25B 9/73; D03D 15/283;**
Y02E 60/36

(86) International application number:
**PCT/CN2017/080699**

(87) International publication number:
**WO 2017/181915 (26.10.2017 Gazette 2017/43)**

(54) **POLYPHENYLENE SULFIDE WOVEN FABRIC FOR WATER ELECTROLYSER AND MANUFACTURING METHOD THEREOF**

POLYPHENYLENSULFIDWEBSTOFF FÜR WASSERELEKTROLYSEUR UND HERSTELLUNGSVERFAHREN DAFÜR

TISSU TISSÉ DE SULFURE DE POLYPHÉNYLÈNE POUR ÉLECTROLYSEUR D'EAU, ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.04.2016 CN 201610238962**
**28.07.2016 CN 201610607900**

(43) Date of publication of application:
**27.02.2019 Bulletin 2019/09**

(73) Proprietor: **Toray Industries, Inc.**
**Tokyo 103-8666 (JP)**

(72) Inventors:
• **ZHANG, Xiaojing**
**Nantong**
**Jiangsu 226009 (CN)**
• **LIU, Tongjuan**
**Nantong**
**Jiangsu 226009 (CN)**

(74) Representative: **Mewburn Ellis LLP**
**Aurora Building**
**Counterslip**
**Bristol BS1 6BX (GB)**

(56) References cited:
**EP-A1- 0 252 604**    **CN-A- 101 971 399**
**CN-A- 104 746 202**    **CN-A- 104 746 202**
**GB-A- 2 091 166**    **JP-A- 2004 285 536**
**US-A- 4 539 082**    **US-A- 4 895 634**
**US-A1- 2014 255 619**

• **SHOUYU ZHANG ET AL: "Effect of air plasma treatment on the mechanical properties of polyphenylene sulfide/glass fiber cloth composites", JOURNAL OF REINFORCED PLASTICS AND COMPOSITES, vol. 32, no. 11, 30 June 2013 (2013-06-30), pages 786-793, XP055609283, US ISSN: 0731-6844, DOI: 10.1177/0731684412470727**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a polyphenylene sulfide woven fabric for a water electrolyser and a manufacturing method thereof.

BACKGROUND OF THE INVENTION

Diaphragm cloth is a main core material of a water electrolyser, and is placed between an anode and a cathode of the water electrolyser to prevent mixing of anode side gas and cathode side gas so as to ensure the purity of the gas and improve the current efficiency and the safety. In addition, the diaphragm of the water electrolyser must have excellent hydrophilicity. Polyphenylene sulfide as a fibrous raw material of the diaphragm is a hydrophobic fiber, so in order to endow the diaphragm with hydrophilicity, hydrophilic processing is needed for the manufactured fabric. At present, the polyphenylene sulfide diaphragm of the water electrolyser is mainly endowed with the hydrophilicity by plasma processing. The plasma processing only treats the surface layer of the fiber, and a hydrophilic group is bonded to the surface layer of the fabric, so that the hydrophilic timeliness of the hydrogen diaphragm is poor, and the hydrophilicity and airtightness of the diaphragm used for a long time may gradually decline to affect the production efficiency.

For example, Chinese Patent No. CN103938337A discloses a diaphragm cloth made of a polyphenylene sulfide fiber. The diaphragm cloth is in the form of a woven fabric, a non-woven fabric or a knitted fabric, plasma processing is performed on the surface of the diaphragm cloth to endow the diaphragm cloth with hydrophilicity, and a water electrolyser diaphragm is thus made. However, the plasma processing can only treat the surface layer of the fiber, so that the hydrophilic timeliness is poor, the hydrophilicity and the airtightness gradually declines with the use of the diaphragm, and the diaphragm cannot really meet the use requirements.

For another example, Chinese Patent No. CN101372752A discloses a non-woven fabric made of a polyphenylene sulfide fiber. The non-woven fabric is endowed with hydrophilicity by sulfonation at 70 to 130°C in 90 to 98% $H_2SO_4$ for 20 to 40 minutes and made into a diaphragm for a water electrolyser. However, the strength of the non-woven fabric itself is low, and the treatment time in the concentrated sulfuric acid solution is relatively long, so that the strength of the non-woven fabric is greatly reduced to affect the use of the diaphragm. CN 104746202A discloses a water electrolyser diaphragm cloth having a hydrophilic radical at the fiber surface that comprises at least one carboxyl (COOH), carbonyl (C=O), hydroxyl (-OH), aldehyde radical (CHO), and -SOx. US 2014/0255619 provides a method for producing a fuel separator.

SUMMARY OF THE INVENTION

An objective of the present invention is to provide a polyphenylene sulfide woven fabric with high airtightness and good hydrophilic timeliness for a water electrolyser.

Another objective of the present invention is to provide a manufacturing method of a polyphenylene sulfide woven fabric for a water electrolyser, which is simple, energy-saving and low in environmental pollution.

The technical solution of the present invention is as follows: the surface of the fiber constituting the polyphenylene sulfide woven fabric for the water electrolyser according to the present invention contains a hydrophilic group, the oxygen content of the surface of the fiber is 15% by weight or more, the hydrophilic group consists of a carbon-oxygen group, a hydroxyl group, a sulfur-oxygen group and an amino group, the carbon-oxygen group is at least one of a carboxyl group, a carbonyl group and an aldehyde group, the content of the carbon-oxygen group is 62 to 72% of a total number of groups in the surface of the fiber, and the content of the sulfur-oxygen group is 6 to 10% of the total number of the groups in the surface of the fiber.

The hydrophilic group consists of a carbon-oxygen group, a hydroxyl group, a sulfur-oxygen group and an amino group. The total content of the carbon-oxygen group and the hydroxyl group is 61 to 80% of the total number of the groups in the surface of the fiber, and the content of the amino group is 2 to 10% of the total number of the groups in the surface of the fiber.

The total content of the carbon-oxygen group and the sulfur-oxygen group is preferably 72 to 85% of the total number of the groups in the surface of the fiber.

The fineness of the warp constituting the polyphenylene sulfide woven fabric of the present invention is preferably 280 to 3000 dtex, and the fineness of the weft is preferably 280 to 3000 dtex.

The density of the warp constituting the polyphenylene sulfide woven fabric of the present invention is preferably 100 to 220 pieces/10 cm, and the density of the weft is preferably 60 to 180 pieces/10 cm.

The thickness of the polyphenylene sulfide woven fabric of the present invention is preferably 0.50 to 2.00 mm.

The gram weight of the polyphenylene sulfide woven fabric of the present invention is preferably 300 to 1000 $g/m^2$.

After a durability treatment, the water absorption speed of the polyphenylene sulfide woven fabric of the present invention is preferably 15 s or less.

The airtightness of the polyphenylene sulfide woven fabric of the present invention is preferably 500 mm $H_2O$ or more.

The water absorption height of the polyphenylene sulfide woven fabric of the present invention is preferably 160 to 280 mm.

After the durability treatment, the reduction rate of the oxygen content of the surface of the fiber of the polyphenylene sulfide woven fabric according to the present invention is preferably 30% or less.

The present invention has the beneficial effects that the polyphenylene sulfide woven fabric for water electrolyser according to the invention has the characteristics of high airtightness and good hydrophilic timeliness, and also has the characteristics of simple process, energy saving and low environmental pollution.

DETAILED DESCRIPTION OF THE EMBODIMENTS

The surface of the fiber constituting a polyphenylene sulfide woven fabric for a water electrolyser according to the present invention contains a hydrophilic group and the oxygen content of the surface of the fiber is 15% by weight or more. The hydrophilic group consists of a carbon-oxygen group and a sulfur-oxygen group, the carbon-oxygen group being at least one of a carboxyl group (-COOH), a carbonyl group (C=O) and an aldehyde group (-CHO). The content of the carbon-oxygen group is 62 to 72% of the total number of the groups in the surface of the fiber, and the content of the sulfur-oxygen group is 6 to 10% of the total number of the groups in the surface of the fiber. The surface of the fiber herein refers to the surface layer of the fiber. The value of the oxygen content of the surface of the fiber is an average value of five measured points on the polyphenylene sulfide woven fabric. The oxygen content in the hydrophilic group of the surface of the fiber constituting the polyphenylene sulfide woven fabric affects the hydrophilic property of the polyphenylene sulfide woven fabric. If the oxygen content is higher, the hydrophilic property is better.

When the polyphenylene sulfide woven fabric after hydrophilic processing is used in the electrolyser, a water film is formed on the surface, thereby blocking the gas on two sides of a diaphragm from passing to the other side, further improving the airtightness of the diaphragm and ensuring the safety. If the oxygen content of the surface of the fiber is less than 15%, the hydrophilicity of the polyphenylene sulfide woven fabric as a diaphragm may be poorly improved, the diaphragm may not be sufficiently wet by an electrolyte, the resistance of the diaphragm is large, the electrolysis efficiency is low, and the energy loss is large. Considering the hydrophilicity and processing cost of the diaphragm, the oxygen content of the surface of the fiber is preferably 20 to 75% by weight, more preferably 20 to 40% by weight.

The content of the carbon-oxygen group in the hydrophilic group is 62 to 72% of the total number of the groups in the surface of the fiber, and the content of the sulfur-oxygen group is 6 to 10% of the total number of the groups in the surface of the fiber. If the content of the carbon-oxygen group in the hydrophilic group is less than 62% of the total number of the groups in the surface of the fiber, and the content of the sulfur-oxygen group is less than 6% of the total number of the groups in the surface of the fiber, since the polyphenylene sulfide woven fabric is affected by a lye and a high temperature during use, and the carbon-oxygen group and the sulfur-oxygen group in a small content may cause rotation or little shedding of the molecular chain, the hydrophilic effect of the polyphenylene sulfide woven fabric is poor, and the hydrophilicity and airtightness of the polyphenylene sulfide woven fabric used for a long time gradually decline to affect the production efficiency; if the content of the carbon-oxygen group in the hydrophilic group is more than 72% of the total number of the groups in the surface of the fiber, and the content of the sulfur-oxygen group is more than 15% of the total number of the groups in the surface of the fiber, the hydrophilic effect of the polyphenylene sulfide woven fabric is good, but the molecular structure of the polyphenylene sulfide changes in the presence of excessive carbon-oxygen group and sulfur-oxygen group, and the polyphenylene sulfide woven fabric becomes fragile and easily broken, so that its tensile strength is lowered, and in extreme cases, the fabric is broken. Comprehensively considering the hydrophilicity, tensile strength and other factors of the polyphenylene sulfide woven fabric to ensure the hydrophilicity of the polyphenylene sulfide woven fabric during use and no influence on the tensile strength of the polyphenylene sulfide woven fabric, preferably, the content of the carbon-oxygen group in the hydrophilic group is 64 to 70% of the total number of the groups in the surface of the fiber, the content of the sulfur-oxygen group is 6 to 10% of the total number of the groups in the surface of the fiber, and more preferably, the content of the sulfur-oxygen group is 8 to 10% of the total number of the groups in the surface of the fiber.

In the carbon-oxygen group, the carboxyl group accounts for 40 to 60%, the carbonyl group accounts for 0 to 30%, and the aldehyde group accounts for 30 to 40%. The reactions for generating these chemical groups are parallel competing reactions, and the activation energy of each chemical reaction is different, so the quantities of functional groups generated are different.

The hydrophilic group consists of a carbon-oxygen group, a hydroxyl group, a sulfur-oxygen group and an amino group, the total content of the carbon-oxygen group and the hydroxyl group is preferably 61 to 80% of the total number of the groups in the surface of the fiber, the content of the sulfur-oxygen group is 6 to 10% of the total number of the groups in the surface of the fiber, and the content of the amino group is 2 to 10% of the total number of the groups in the surface of the fiber. The hydroxyl group and the amino group are generated by bonding oxygen and hydrogen in air to the benzene ring of the polyphenylene sulfide under the action of ultraviolet irradiation. Since the hydroxyl group and the amino group are basic groups, they are unlikely to shed in the KOH solution. With the use of the polyphenylene sulfide woven fabric in the KOH alkaline solution, the contents of the hydroxyl group and the amino group are not reduced obviously, so better hydrophilic effect and airtightness can be kept. If the total content of the carbon-oxygen group and the hydroxyl group is too low in the total number of the groups in the surface of the fiber, it indicates that the ultraviolet irradiation is insufficient, which may affect the hydrophilic timeliness of the polyphenylene sulfide woven fabric, the content of the carbon-oxygen group and the hydroxyl group in the surface of the fiber is increasingly low with long-time use of the polyphenylene sulfide woven fabric, and the hydrophilicity and the airtightness gradually decline, thereby affecting the production efficiency; if the total content of the carbon-oxygen group and the hydroxyl group is too high in the total number of the groups in the surface of the fiber, it indicates that the ultraviolet irradiation is excessive, the hydrophilic effect of the polyphenylene sulfide woven fabric is good, but the molecular structure of the polyphenylene sulfide changes greatly in the presence of excessive carbon-oxygen group and sulfur-oxygen group, and the polyphenylene sulfide woven fabric becomes fragile and easily broken, so that its tensile strength is lowered, the fabric is broken in extreme cases, and the pore diameter of the polyphenylene sulfide woven fabric is increased to affect its airtightness. Comprehensively considering the hydrophilicity, airtightness, tensile strength and other factors of the polyphenylene sulfide woven fabric to ensure the hydrophilicity and airtightness of the polyphenylene sulfide woven fabric during use and no influence on the tensile strength of the polyphenylene sulfide woven fabric, more preferably, the content of the carbon-oxygen group and the hydroxyl group is 65 to 70% of the total number of the groups in the surface of the fiber, and the content of the sulfur-oxygen group is 6 to 9% of the total number of the groups in the surface of the fiber.

The content of the amino group is 2 to 10% of the total number of the groups in the surface of the fiber. If the content of the amino group is too low in the total number of the groups in the surface of the fiber, when the polyphenylene sulfide woven fabric is affected by a lye and a high temperature during use, the hydroxyl group in a small content may partially shed or the molecular chain may rotate, resulting in poor hydrophilic effect of the polyphenylene sulfide woven fabric. With long-time use of the polyphenylene sulfide woven fabric, its hydrophilicity and airtightness will gradually decline, thereby affecting the production efficiency; if the content of the amino group is too high in the total number of the groups in the surface of the fiber, it indicates that the ultraviolet irradiation is excessive, the content of the amino group is high, the hydrophilic effect of the polyphenylene sulfide woven fabric is good, but the molecular structure of the polyphenylene sulfide changes greatly in the presence of excessive hydrophilic group, and the polyphenylene sulfide woven fabric becomes fragile and easily broken, so that its tensile strength is lowered, the fabric is broken in extreme cases, and the pore diameter of the polyphenylene sulfide woven fabric is increased to affect its airtightness; and considering the hydrophilicity, airtightness, tensile strength and other factors of the polyphenylene sulfide woven fabric to ensure the hydrophilicity and airtightness of the polyphenylene sulfide woven fabric during use and no influence on the tensile strength of the polyphenylene sulfide woven fabric, more preferably, the content of the amino group is 3 to 8% of the total number of the groups in the surface of the fiber.

In the present invention, the total content of the carbon-oxygen group and the sulfur-oxygen group is preferably 72 to 85% of the total number of the groups in the surface of the fiber; if the total content of the carbon-oxygen group and the sulfur-oxygen group in the hydrophilic group is too low, the hydrophilic timeliness of the polyphenylene sulfide woven fabric is poor, and the hydrophilicity and airtightness of the polyphenylene sulfide woven fabric will gradually decline with long-time use, thereby affecting the production efficiency; if the total content of the carbon-oxygen group and the sulfur-oxygen group is too high, the hydrophilic effect of the polyphenylene sulfide woven fabric is good, but the molecular structure of the polyphenylene sulfide changes greatly in the presence of excessive carbon-oxygen group and sulfur-oxygen group, and the polyphenylene sulfide woven fabric becomes fragile and easily broken, so that its tensile strength is lowered, the fabric is broken in extreme cases, and the pore diameter of the polyphenylene sulfide woven fabric is increased to affect its airtightness.

The fineness of the warp constituting the polyphenylene sulfide woven fabric of the present invention is preferably 280 to 3000 dtex, and the fineness of the weft is preferably 280 to 3000 dtex. If the fineness of the warp or weft constituting the polyphenylene sulfide woven fabric is too small, there are many interlacing points in the fabric, and the air permeability is large, resulting in poor airtightness, and also affecting the mechanical properties of the polyphenylene sulfide woven fabric. If the fineness of the warp or weft constituting the polyphenylene sulfide woven fabric is too large, the obtained polyphenylene sulfide woven fabric is thick, resulting in increase of the resistance of the diaphragm, which increases the energy consumption in the hydrogen production process.

The twist factors of the warp and the weft constituting the polyphenylene sulfide woven fabric of the present invention are preferably 250 to 500. If the twist factors of the warp and the weft constituting the polyphenylene sulfide woven fabric are too small, the strength of the yarn is low, and the hairiness is more, which affects the weaving. If the twist factors of the warp and the weft constituting the polyphenylene sulfide woven fabric are too large, the interlacing point pores in the fabric are obvious, and the airtightness is affected.

The density of the warp constituting the polyphenylene sulfide woven fabric is preferably 100 to 220 pieces/10 cm, and the density of the weft is preferably 60 to 180 pieces/10 cm. If the density of the warp or weft constituting the polyphenylene sulfide woven fabric is too small, the covering factor of the fabric is low, and the pores of the fabric are large, so that the airtightness of the diaphragm cannot meet the requirements. If the density of the warp or weft constituting the polyphenylene sulfide woven fabric is too large, the weaving difficulty will be increased, and the gram weight of the fabric will be too large, which will increase the production cost.

The thickness of the polyphenylene sulfide woven fabric of the present invention is preferably 0.50 to 2.00 mm. If the thickness of the polyphenylene sulfide woven fabric is too small, the stiffness of the diaphragm is low, which increases the difficulty of mounting the diaphragm. If the thickness of the polyphenylene sulfide woven fabric is too large, the resistance of the diaphragm is increased, and the energy consumption in the hydrogen production process is increased so that the production cost is improved. The thickness of the polyphenylene sulfide woven fabric of the present invention is more preferably 0.50 to 1.50 mm in view of stiffness of the obtained diaphragm, production cost and other factors.

The gram weight of the polyphenylene sulfide woven fabric of the present invention is preferably 300 to 1000 g/m$^2$. If the gram weight of the polyphenylene sulfide woven fabric is too small, the stiffness of the polyphenylene sulfide woven fabric is low, which increases the difficulty of mounting the diaphragm. If the gram weight of the polyphenylene sulfide woven fabric is too large, the cost of the fabric and the resistance of the diaphragm will be increased, and the energy consumption in the hydrogen production process is also increased so that the production cost is improved.

After a durability treatment, the water absorption speed of the polyphenylene sulfide woven fabric is preferably 15 s or less. Here, the durability treatment refers to treatment in 30% KOH solution at a temperature of 80 to 120°C for one month, and the treatment temperature is determined according to the actual use environment of the diaphragm. The water absorption speed of the polyphenylene sulfide woven fabric is preferably 15 s or less, more preferably 10 s or less, thereby ensuring excellent hydrophilicity with long-time use of the polyphenylene sulfide woven fabric in the water electrolyser. Generally, the water absorption speed of the polyphenylene sulfide woven fabric is more than 300 s after the durability treatment.

The airtightness of the polyphenylene sulfide woven fabric for a water electrolyser according to the present invention is preferably 500 mm H$_2$O in view of excellent airtightness, ion passing efficiency and processability of the polyphenylene sulfide woven fabric.

The water absorption height of the polyphenylene sulfide woven fabric of the present invention is preferably 160 to 280 mm. The water absorption height is also one of the indicators for determining the water absorption effect of the diaphragm. If the water absorption height is larger, the water absorption effect is better. If the water absorption effect of the polyphenylene sulfide woven fabric is poor, the sulfonation or plasma processing or ultraviolet irradiation is insufficient. The water absorption height is more preferably 200 to 280 mm.

After the durability treatment, the reduction rate of the oxygen content of the surface of the fiber of the polyphenylene sulfide woven fabric is preferably less than 30%. Here, the durability treatment indicates that the reduction rate of the oxygen content of the surface of the fiber of the polyphenylene sulfide woven fabric is within 30% after the treatment for one month in a 30% KOH solution at a temperature of 80 to 120°C, thereby ensuring excellent hydrophilicity with long-time use of the polyphenylene sulfide woven fabric in the water electrolyser.

A manufacturing method of the polyphenylene sulfide woven fabric for a water electrolyser according to the present invention is as follows: weaving polyphenylene sulfide yarns having a fineness of 280 to 3000 dtex as warps and wefts on a gripper loom or a heavy shaft loom to obtain a gray fabric; scouring the obtained gray fabric at a temperature of 90 to 95°C and a speed of 20 to 40 m/min, then drying at a temperature of 130 to 150°C with a cylinder dryer, and irradiating the dried polyphenylene sulfide woven fabric with ultraviolet rays, optionally at a temperature of 60 to 90°C for 10 to 60 hours to finally obtain a finished product..

If the scouring temperature is less than 90°C, stains on the surface of the fabric are unlikely to remove; if the scouring temperature is more than 95°C, not only more energy is consumed, but also the production cost is increased; if the scouring speed is less than 20 m/min, the production efficiency is affected; if the scouring speed is more than 40 m/min, the scouring solution cannot be in full contact with the filter fabric, and stains on the surface of the fabric cannot be completely washed; if the drying temperature is less than 130°C, the scoured filter fabric is unlikely to dry, and the drying production efficiency is low; and if the drying temperature is more than 150°C, the energy consumption is increased and the production cost is also increased to a certain extent.

The polyphenylene sulfide woven fabric may be sulfonated, or sulfonated and then subjected to plasma processing. Preferably, the polyphenylene sulfide woven fabric is sulfonated and then subjected to plasma processing, so that all fibers can be treated, and hydrophilic groups are bonded to the surface layer and the inner layer of the fabric. Therefore, the hydrophilic timeliness of the polyphenylene sulfide woven fabric obtained by the above hydrophilic processing method is superior to that of the diaphragm only subjected to plasma processing. Moreover, the sulfonating temperature and time must be controlled within a certain range. If the sulfonating temperature is less than 80°C and the treatment time is less than 6 min, the sulfonation with the sulfuric acid on the polyphenylene sulfide woven fabric is insufficient, so that the content of the carbon-oxygen group and the content of the sulfur-oxygen group in the polyphenylene sulfide woven fabric are reduced, the hydrophilicity of the diaphragm formed by the polyphenylene sulfide woven fabric is lowered, the water absorption speed of the diaphragm is reduced after the durability treatment, and eventually, the diaphragm cannot be sufficiently wet by the electrolyte. If the sulfonating temperature is more than 130°C and the treatment time is more than 12 min, the content of the carbon-oxygen group and the content of the sulfur-oxygen group in the polyphenylene sulfide woven fabric are increased, the hydrophilicity becomes higher, but in the presence of excessive hydrophilic groups, the energy is wasted, the molecular structure of the polyphenylene sulfide changes, and the benzene ring and the carbon-oxygen bond in the polyphenylene sulfide woven fabric are excessively damaged, thereby affecting the stability of the molecular structure, burning the surface of the fabric and affecting the tensile breaking strength of the polyphenylene sulfide woven fabric. The sulfonating temperature is preferably 100 to 130°C in consideration of the hydrophilicity and tensile breaking strength of the polyphenylene sulfide woven fabric.

The above plasma treatment is an atmospheric pressure plasma surface treatment or a low pressure plasma surface treatment. Under the action of air, the treatment intensity is 50 to 500 KW•s/m$^2$, and the calculation formula of the treatment intensity is as follows:

$$\text{Treatment intensity} = \text{discharge power (KW)/ treatment speed (m/s)/ treatment width (m)}.$$

After the sulfonation" a polyphenylene sulfide woven fabric may be subjected to plasma processing at a treatment intensity of 50 to 500 KW•s/m$^2$. If the plasma treatment intensity is too low, the energy of plasma charged particles is low, the grafting reaction on the surface of the fiber is weak, and the number of the hydrophilic group in the surface of the fiber is reduced, indicating that the content of the carbon-oxygen group and the content of the sulfur-oxygen group in the polyphenylene sulfide woven fabric are reduced. If the plasma treatment
intensity is too high, the polyphenylene sulfide woven fabric is burned by current, thereby affecting the tensile breaking strength of the polyphenylene sulfide woven fabric.

In the method aspect of the present invention, the polyphenylene sulfide woven fabric is treated by ultraviolet irradiation, so that a hydroxyl group and an amino group of the hydrophilic group can be produced on the surface of the polyphenylene sulfide fiber. The hydroxyl group and the amino group are basic groups and are not affected by the lye during the use of the diaphragm, and the polyphenylene sulfide woven fabric obtained by the ultraviolet irradiation treatment method has longer hydrophilic timeliness compared to sulfonation or plasma processing, so that the production efficiency can be improved. The ultraviolet irradiation temperature is preferably 60 to 90°C, and the time is preferably 10 to 60 hours. If the ultraviolet irradiation temperature is too low and the irradiation time is too short, the ultraviolet treatment on the polyphenylene sulfide woven fabric is insufficient, so that the contents of the carbon-oxygen group, the hydroxyl group, the sulfur-oxygen group and the amino group in the polyphenylene sulfide woven fabric are reduced, the hydrophilicity of the diaphragm formed by the polyphenylene sulfide woven fabric is lowered, and the diaphragm cannot be sufficiently wet by the electrolyte with the use of the diaphragm. If the ultraviolet irradiation temperature is too high and the irradiation time is too long, the contents of the carbon-oxygen group, the hydroxyl group, the sulfur-oxygen group and the amino group in the polyphenylene sulfide woven fabric are increased, the hydrophilicity becomes higher, but in the presence of excessive hydrophilic groups, the energy is wasted, the molecular structure of the polyphenylene sulfide changes, and the benzene ring and the carbon-oxygen bond in the polyphenylene sulfide woven fabric are excessively damaged, thereby affecting the stability of the molecular structure, excessively burning the surface of the fabric, affecting the tensile breaking strength of the polyphenylene sulfide woven fabric and also increasing the cost.

The present invention will be further illustrated through the following examples; Examples 1 to 3 and 9 to 14 do not illustrate claim 1. The physical properties in the examples are determined by the following methods.

[Twist factor]

$$\text{Twist factor } \alpha = t*T_1{}^{\wedge}(l/2),$$

wherein, t-twist (T/10 cm), Ti-yarn fineness (tex).

[Warp and weft densities]

According to the JIS L1096 8.6 density method, measure warp and weft densities of the fabric using a densitometer, the measurement range of the densitometer being 1 inch (2.54 cm), the warp density measured being m pieces/2.54 cm, and the weft density being n pieces/2.54 cm; convert the warp density to (m/2.54*10) pieces/10 cm, and convert the weft density to (n/2.54*10) pieces/10 cm, the warp or weft density being an average value of 5 measured values.

[Gram weight]

According to the JIS L1096 8.4.2 method, cut three experimental pieces of 100 cm$^2$ using a disc sampler in a standard state, weigh each of them in the standard state, solve the gram weight of each experimental piece according to the calculation formula: gram weight = mass/ area, and solve an average value.

[Thickness]

According to the JIS L1096 8.4.3 method, cut three 20cm×20cm experimental pieces in a standard state, measure the intermediate thickness of each experimental piece using a thickness meter (model THC-3ND, pressure 23.5 kPa (240 gf/cm$^2$)), and solve an average value.

[Airtightness]

According to the 4.5.2 airtightness test method of diaphragm asbestos cloth standards of Chinese building material industry standards JCT 211-2009, select 20cm×20cm experimental samples, soak the samples into water for 30 minutes, flatly mount each sample on test equipment after the sample is soaked thoroughly to ensure sealing and no water leakage, add water 10 cm away from the surface of the fabric above the sample, observe the water surface to ensure no air leakage within 2 minutes, record the airtightness test value at this moment, and solve an average value, wherein each group includes at least three samples.

[Water absorption speed]

Test according to the 7.1.1 dropping method in the water absorption test method for JIS L1907-2010 fiber products: add a certain amount of deionized water into a burette, fix the burette vertically, tension the tested diaphragm cloth with a tension band, place the diaphragm cloth horizontally under the burette, adjust the position of the burette to ensure that the bottom of the burette is 1 cm away from the surface of the fabric, slowly open a piston of the burette to ensure that a drop of water drops onto the surface of the fabric, record the time when the water drop is completely absorbed by using a stopwatch, test each group of samples at least 5 times and solve an average value.

[Water absorption height]

Test according to the 7.1.2 Byreck method in the water absorption test method for JIS L1907-2010 fiber products: select 30cm×2.5cm experimental samples, clip each sample vertically on a test clip, add a certain amount of deionized water into a water injection container below to soak the lower end of the sample into water 2 cm, stand for 10 minutes, mark the highest water absorption point of the sample, take the sample down from the test clip, measure the water absorption height value horizontally, test each group of samples at least 3 times and solve an average value.

[Tensile breaking strength]

According to the JIS L1096 8.12.1A method (base fabric edge-pulling method), for a common fabric, select 30cm×6cm experimental samples, and pull the same number of yarns out from two sides to ensure that the remaining breadth of each experimental sample meets a specified breadth: 5 cm. Clamp two ends of each sample with a clamp on a tensile test machine, the distance between chucks being 20 cm; measure the breaking strength when the sample is broken at a constant speed of 20 cm/min, test each group of samples at least 3 times and solve an average value.

[Hydrophilic group components and oxygen elements thereof]

Analyze chemical components on the surface of the fiber qualitatively and quantitatively using an X-ray photoelectron spectroscopy analyzer (product of Germany Thermo Company; model: ESCALAB 250Xi). Calculate the oxygen content of the surface of the fiber according to the X-ray photoelectron spectroscopy. Determine hydrophilic group components according to the binding energy of each carbon-oxygen peak which can be clearly recognized in the X-ray photoelectron spectroscopy. Test three points for each group of samples, each point corresponding to an oxygen content; and solve an average value of test values of the three points.

[Contents of carbon-oxygen group, sulfur-oxygen group, hydroxyl group and amino group]

Analyze chemical components on the surface of the fiber qualitatively and quantitatively using an X-ray photoelectron spectroscopy analyzer (product of Germany Thermo Company; model: ESCALAB 250Xi). Separate peaks according to the oxygen content calculated from X-ray photoelectron spectroscopy, determine a carbon-oxygen group, a sulfur-oxygen group and a hydroxyl group based on the corresponding peaks, and calculate the corresponding content; separate peaks according to the nitrogen content calculated from the X-ray photoelectron spectroscopy, determine an amino group based on the corresponding peak, and calculate the content thereof.

[Reduction rate of oxygen content]

Analyze chemical components on the surface of the fiber of the polyphenylene sulfide woven fabric before treatment qualitatively and quantitatively using an X-ray photoelectron spectroscopy analyzer (product of Germany Thermo Company; model: ESCALAB 250Xi), and calculate the oxygen content M of the surface of the fiber according to the X-ray photoelectron spectroscopy; then perform durability treatment on the surface of the fiber of the polyphenylene sulfide woven fabric in a 30% KOH solution at a temperature of 80 to 120°C for 1 month, qualitatively and quantitatively analyze the chemical components on the surface of the fiber of the polyphenylene sulfide woven fabric after the durability treatment, calculate the oxygen content N of the surface of the fiber according to the X-ray photoelectron spectroscopy, and calculate the reduction rate of the oxygen content through the oxygen content of the surface of the fiber before and after the durability treatment. The calculation formula is as follows: Reduction rate (%) of oxygen content = (N-M)/ M * 100%. Examples 4 to 8 illustrate the invention of claim 1.

Example 1

Twist six polyphenylene sulfide single yarns having a fineness of 300 dtex and a twist factor of 310 to form a polyphenylene sulfide yarn having a fineness of 1800 dtex and a twist factor of 320. Weave the twisted polyphenylene sulfide yarns as warps and wefts on a gripper loom to obtain a plain woven fabric having a warp density of 154 pieces/10 cm and a weft density of 106 pieces/10 cm, scour the obtained plain woven fabric at a temperature of 90°C and a speed of 30 m/min, then dry at 130°C with a cylinder dryer, sulfonate in 95% concentrated sulfuric acid at a temperature of 80°C for 12 min, wash and dry after the sulfonation, and perform plasma processing at an intensity of 50 KW•s/m$^2$ to finally obtain a polyphenylene sulfide woven fabric having a thickness of 0.90 mm for a water electrolyser. The obtained polyphenylene sulfide woven fabric was tested through an X-ray photoelectron spectroscopy analyzer, and it was determined that the surface of the fiber of the polyphenylene sulfide woven fabric contained a hydrophilic group, the oxygen content of the surface of the fiber was 26% by weight, the content of the carbon-oxygen group in the hydrophilic group was 64% of the total number of the groups in the surface of the fiber, the carbon-oxygen group included 40% of carboxyl group, 30% of carbonyl group and 30% of aldehyde group, and the content of the sulfur-oxygen group was 10% of the total number of the groups in the surface of the fiber. The water absorption speed of the polyphenylene sulfide woven fabric after being treated in a 30% KOH solution at a temperature of 90°C was 8s. The physical properties of a polyphenylene sulfide diaphragm for a water electrolyser according to the present invention were shown in Table 1 below.

Example 2

Twist four polyphenylene sulfide single yarns having a fineness of 300 dtex and a twist factor of 310 to form a polyphenylene sulfide yarn having a fineness of 1200 dtex and a twist factor of 435. Weave the twisted polyphenylene sulfide yarns as warps and wefts on a gripper loom to obtain a plain woven fabric having a warp density of 177 pieces/10 cm and a weft density of 122 pieces/10 cm, scour the obtained plain woven fabric at a temperature of 95°C and a speed of 35 m/min, then dry at 140°C with a cylinder dryer, sulfonate in 95% concentrated sulfuric acid at a temperature of 90°C for 10 min, wash and dry after the sulfonation, and perform plasma processing at an intensity of 100 KW•s/m$^2$ to finally obtain a polyphenylene sulfide woven fabric having a thickness of 0.77 mm for a water electrolyser. The obtained polyphenylene sulfide woven fabric was tested through an X-ray photoelectron spectroscopy analyzer, and it was determined that the surface of the fiber of the polyphenylene sulfide woven fabric contained a hydrophilic group, the oxygen content of the surface of the fiber was 33% by weight, the content of the carbon-oxygen group in the hydrophilic group was 64% of the total number of the groups in the surface of the fiber, the carbon-oxygen group included 42% of carboxyl group, 28% of carbonyl group and 30% of aldehyde group, and the content of the sulfur-oxygen group was 8% of the total number of the groups in the surface of the fiber. The water absorption speed of the polyphenylene sulfide woven fabric after being treated in a 30% KOH solution at a temperature of 100°C was 9 s. The physical properties of a polyphenylene sulfide diaphragm for a water electrolyser according to the present invention were shown in Table 1 below.

Example 3

Twist eight polyphenylene sulfide single yarns having a fineness of 500 dtex and a twist factor of 350 to form a polyphenylene sulfide yarn having a fineness of 4000 dtex and a twist factor of 300. Weave the twisted polyphenylene sulfide yarns as warps and wefts on a gripper loom to obtain a plain woven fabric having a warp density of 110 pieces/10 cm and a weft density of 70 pieces/10 cm, scour the obtained plain woven fabric at a temperature of 92°C and a speed of 25 m/min, then dry at 135°C with a cylinder dryer, sulfonate in 95% concentrated sulfuric acid at a temperature of 100°C for 9 min, wash and dry after the sulfonation, and perform plasma processing at an intensity of 200 KW•s/m$^2$ to finally obtain a polyphenylene sulfide woven fabric having a thickness of 1.50 mm for a water electrolyser. The obtained polyphenylene sulfide woven fabric was tested through an X-ray photoelectron spectroscopy analyzer, and it was determined that the surface of the fiber of the polyphenylene sulfide woven fabric contained a hydrophilic group, the oxygen content of the surface of the fiber was 40% by weight, the content of the carbon-oxygen group in the hydrophilic group was 68% of the total number of the groups in the surface of the fiber, the carbon-oxygen group included 48% of carboxyl group, 20% of carbonyl group and 32% of aldehyde group, and the content of the sulfur-oxygen group was 9% of the total number of the groups in the surface of the fiber. The water absorption speed of the polyphenylene sulfide woven fabric after being treated in a 30% KOH solution at a temperature of 110°C was 6 s. The physical properties of a polyphenylene sulfide diaphragm for a water electrolyser according to the present invention were shown in Table 1 below.

Example 4

Weave polyphenylene sulfide yarns having a fineness of 400 dtex and a twist factor of 475 as warps and wefts on a gripper loom to obtain a plain woven fabric having a warp density of 220 pieces/10 cm and a weft density of 180 pieces/10 cm, scour the obtained plain woven fabric at a temperature of 93°C and a speed of 20 m/min, then dry at 140°C with a cylinder dryer, and perform ultraviolet irradiation at a temperature of 85°C for 30 h to finally obtain a polyphenylene sulfide woven fabric having a thickness of 0.60 mm for a water electrolyser. The obtained polyphenylene sulfide woven fabric was tested through an X-ray photoelectron spectroscopy analyzer, and it was determined that the surface of the fiber of the polyphenylene sulfide woven fabric contained a hydrophilic group, the oxygen content of the surface of the fiber was 35% by weight, the content of the carbon-oxygen group in the hydrophilic group was 62% of the total number of the groups in the surface of the fiber, the content of the carbon-oxygen group and the hydroxy group was 69% of the total number of the groups in the surface of the fiber, the carbon-oxygen group included 44% of carboxyl group, 20% of carbonyl group and 36% of aldehyde group, the content of the sulfur-oxygen group was 10% of the total number of the groups in the surface of the fiber, and the content of the amino group was 8% of the total number of the groups in the surface of the fiber. The water absorption speed was 5 s after a treatment in a 30% KOH solution at a temperature of 90°C. The physical properties of the polyphenylene sulfide woven fabric for a water electrolyser according to the present invention were shown in Table 1 below.

Example 5

Twist five polyphenylene sulfide single yarns having a fineness of 500 dtex and a twist factor of 350 to form a polyphenylene sulfide yarn having a fineness of 2500 dtex and a twist factor of 316. Weave the twisted polyphenylene sulfide yarns as warps and wefts on a gripper loom to obtain a plain woven fabric having a warp density of 120 pieces/10 cm and a weft density of 90 pieces/10 cm, scour the obtained plain woven fabric at a temperature of 95°C and a speed of 40m/min, then dry at 145°C with a cylinder dryer, and perform ultraviolet irradiation at a temperature of 90°C for 20 h to finally obtain a polyphenylene sulfide woven fabric having a thickness of 1.20 mm for a water electrolyser. The obtained polyphenylene sulfide woven fabric was tested through an X-ray photoelectron spectroscopy analyzer, and it was determined that the surface of the fiber of the polyphenylene sulfide woven fabric contained a hydrophilic group, the oxygen content of the surface of the fiber was 32% by weight, the content of the carbon-oxygen group in the hydrophilic group was 65% of the total number of the groups in the surface of the fiber, the content of the carbon-oxygen group and the hydroxy group was 74% of the total number of the groups in the surface of the fiber, the carbon-oxygen group included 48% of carboxyl group, 16% of carbonyl group and 36% of aldehyde group, the content of the sulfur-oxygen group was 8% of the total number of the groups in the surface of the fiber, and the content of the amino group was 6% of the total number of the groups in the surface of the fiber. The water absorption speed was 8 s after a treatment in a 30% KOH solution at a temperature of 90°C. The physical properties of the polyphenylene sulfide woven fabric for a water electrolyser according to the present invention were shown in Table 1 below.

Example 6

Twist ten polyphenylene sulfide single yarns having a fineness of 500 dtex and a twist factor of 350 to form a polyphenylene sulfide yarn having a fineness of 5000 dtex and a twist factor of 268. Weave the twisted polyphenylene sulfide yarns as warps and wefts on a gripper loom to obtain a plain woven fabric having a warp density of 100 pieces/10 cm and a weft density of 60 pieces/10 cm, scour the obtained plain woven fabric at a temperature of 95°C and a speed of 40 m/min, then dry at 150°C with a cylinder dryer, and perform ultraviolet irradiation at a temperature of 90°C for 10 h to finally obtain a polyphenylene sulfide woven fabric having a thickness of 2.00 mm for a water electrolyser. The obtained polyphenylene sulfide woven fabric was tested through an X-ray photoelectron spectroscopy analyzer, and it was determined that the surface of the fiber of the polyphenylene sulfide woven fabric contained a hydrophilic group, the oxygen content of the surface of the fiber was 27% by weight, the content of the carbon-oxygen group in the hydrophilic group was 70% of the total number of the groups in the surface of the fiber, the content of the carbon-oxygen group and the hydroxy group was 78% of the total number of the groups in the surface of the fiber, the carbon-oxygen group included 40% of carboxyl group, 25% of carbonyl group and 35% of aldehyde group, the content of the sulfur-oxygen group was 6% of the total number of the groups in the surface of the fiber, and the content of the amino group was 4% of the total number of the groups in the surface of the fiber. The water absorption speed was 9 s after a treatment in a 30% KOH solution at a temperature of 90°C. The physical properties of the polyphenylene sulfide woven fabric for a water electrolyser according to the present invention were shown in Table 1 below.

Example 7

Weave polyphenylene sulfide yarns having a fineness of 400 dtex and a twist factor of 475 as warps and wefts on a gripper loom to obtain a plain woven fabric having a warp density of 220 pieces/10 cm and a weft density of 180 pieces/10 cm, scour the obtained plain woven fabric at a temperature of 93°C and a speed of 20 m/min, then dry at 140°C with a cylinder dryer, and perform ultraviolet irradiation at a temperature of 85°C for 20 h to finally obtain a polyphenylene sulfide woven fabric having a thickness of 0.60 mm for a water electrolyser. The obtained polyphenylene sulfide woven fabric was tested through an X-ray photoelectron spectroscopy analyzer, and it was determined that the surface of the fiber of the polyphenylene sulfide woven fabric contained a hydrophilic group, the oxygen content of the surface of the fiber was 33% by weight, the content of the carbon-oxygen group in the hydrophilic group was 63% of the total number of the groups in the surface of the fiber, the content of the carbon-oxygen group and the hydroxy group was 71% of the total number of the groups in the surface of the fiber, the carbon-oxygen group included 46% of carboxyl group, 20% of carbonyl group and 34% of aldehyde group, the content of the sulfur-oxygen group was 7% of the total number of the groups in the surface of the fiber, and the content of the amino group was 5% of the total number of the groups in the surface of the fiber. The water absorption speed was 6 s after a treatment in a 30% KOH solution at a temperature of 90°C. The physical properties of the polyphenylene sulfide woven fabric for a water electrolyser according to the present invention were shown in Table 1 below.

Example 8

Twist ten polyphenylene sulfide single yarns having a fineness of 500 dtex and a twist factor of 350 to form a polyphenylene sulfide yarn having a fineness of 5000 dtex and a twist factor of 268. Weave the twisted polyphenylene sulfide yarns as warps and wefts on a gripper loom to obtain a plain woven fabric having a warp density of 100 pieces/10 cm and a weft density of 60 pieces/10 cm, scour the obtained plain woven fabric at a temperature of 95°C and a speed of 40 m/min, then dry at 150°C with a cylinder dryer, and perform ultraviolet irradiation at a temperature of 60°C for 10 h to finally obtain a polyphenylene sulfide woven fabric having a thickness of 2.00 mm for a water electrolyser. The obtained polyphenylene sulfide woven fabric was tested through an X-ray photoelectron spectroscopy analyzer, and it was determined that the surface of the fiber of the polyphenylene sulfide woven fabric contained a hydrophilic group, the oxygen content of the surface of the fiber was 20% by weight, the content of the carbon-oxygen group in the hydrophilic group was 66% of the total number of the groups in the surface of the fiber, the content of the carbon-oxygen group and the hydroxy group was 70% of the total number of the groups in the surface of the fiber, the carbon-oxygen group included 40% of carboxyl group, 22% of carbonyl group and 38% of aldehyde group, the content of the sulfur-oxygen group was 6% of the total number of the groups in the surface of the fiber, and the content of the amino group was 4% of the total number of the groups in the surface of the fiber. The water absorption speed was 13 s after a treatment in a 30% KOH solution at a temperature of 90°C. The physical properties of the polyphenylene sulfide woven fabric for a water electrolyser according to the present invention were shown in Table 1 below.

Example 9

Twist four polyphenylene sulfide single yarns having a fineness of 300 dtex and a twist factor of 310 to form a polyphenylene sulfide yarn having a fineness of 1200 dtex and a twist factor of 435. Weave the twisted polyphenylene sulfide yarns as warps and wefts on a gripper loom to obtain a plain woven fabric having a warp density of 177 pieces/10 cm and a weft density of 122 pieces/10 cm, scour the obtained plain woven fabric at a temperature of 95°C and a speed of 35 m/min, then dry at 140°C with a cylinder dryer, and perform ultraviolet irradiation at a temperature of 85°C for 50 h to finally obtain a polyphenylene sulfide woven fabric having a thickness of 0.77 mm for a water electrolyser. The obtained polyphenylene sulfide woven fabric was tested through an X-ray photoelectron spectroscopy analyzer, and it was determined that the surface of the fiber of the polyphenylene sulfide woven fabric contained a hydrophilic group, the oxygen content of the surface of the fiber was 41% by weight, the content of the carbon-oxygen group in the hydrophilic group was 68% of the total number of the groups in the surface of the fiber, the content of the carbon-oxygen group and the hydroxy group was 75% of the total number of the groups in the surface of the fiber, the carbon-oxygen group included 45% of carboxyl group, 18% of carbonyl group and 37% of aldehyde group, the content of the sulfur-oxygen group was 6% of the total number of the groups in the surface of the fiber, and the content of the amino group was 12% of the total number of the groups in the surface of the fiber. The water absorption speed was 10 s after a treatment in a 30% KOH solution at a temperature of 90°C. The physical properties of the polyphenylene sulfide woven fabric for a water electrolyser according to the present invention were shown in Table 1 below.

Example 10

Weave polyphenylene sulfide yarns having a fineness of 400 dtex and a twist factor of 475 as warps and wefts on a gripper loom to obtain a plain woven fabric having a warp density of 220 pieces/10 cm and a weft density of 180 pieces/10 cm, scour the obtained plain woven fabric at a temperature of 93°C and a speed of 20 m/min, then dry at 140°C with a cylinder dryer, and perform ultraviolet irradiation at a temperature of 85°C for 20 h to finally obtain a polyphenylene sulfide woven fabric having a thickness of 0.60 mm for a water electrolyser. The obtained polyphenylene sulfide woven fabric was tested through an X-ray photoelectron spectroscopy analyzer, and it was determined that the surface of the fiber of the polyphenylene sulfide woven fabric contained a hydrophilic group, the oxygen content of the surface of the fiber was 46% by weight, the content of the carbon-oxygen group in the hydrophilic group was 72% of the total number of the groups in the surface of the fiber, the content of the carbon-oxygen group and the hydroxy group was 82% of the total number of the groups in the surface of the fiber, the carbon-oxygen group included 46% of carboxyl group, 20% of carbonyl group and 34% of aldehyde group, the content of the sulfur-oxygen group was 6% of the total number of the groups in the surface of the fiber, and the content of the amino group was 3% of the total number of the groups in the surface of the fiber. The water absorption speed was 15 s after a treatment in a 30% KOH solution at a temperature of 90°C. The physical properties of the polyphenylene sulfide woven fabric for a water electrolyser according to the present invention were shown in Table 1 below.

Example 11

Twist six polyphenylene sulfide single yarns having a fineness of 300 dtex and a twist factor of 310 to form a polyphenylene sulfide yarn having a fineness of 1800 dtex and a twist factor of 320. Weave the twisted polyphenylene sulfide yarns as warps and wefts on a gripper loom to obtain a plain woven fabric having a warp density of 154 pieces/10 cm and a weft density of 106 pieces/10 cm, scour the obtained plain woven fabric at a temperature of 90°C and a speed of 30 m/min, then dry at 130°C with a cylinder dryer, sulfonate in 95% concentrated sulfuric acid at a temperature of 130°C for 12 min, wash and dry after the sulfonation, and perform plasma processing at an intensity of 50 KW·s/m$^2$ to obtain a polyphenylene sulfide woven fabric having a thickness of 0.90 mm for a water electrolyser. The obtained polyphenylene sulfide woven fabric was tested through an X-ray photoelectron spectroscopy analyzer, and it was determined that the surface of the fiber of the polyphenylene sulfide woven fabric contained a hydrophilic group, the oxygen content of the surface of the fiber was 55% by weight, the content of the carbon-oxygen group in the hydrophilic group was 72% of the total number of the groups in the surface of the fiber, the carbon-oxygen group included 50% of carboxyl group, 15% of carbonyl group and 35% of aldehyde group, and the content of the sulfur-oxygen group was 15% of the total number of the groups in the surface of the fiber. The water absorption speed of the polyphenylene sulfide woven fabric after being treated in a 30% KOH solution at a temperature of 110°C was 10 s. The physical properties of a polyphenylene sulfide diaphragm for a water electrolyser according to the present invention were shown in Table 1 below.

Example 12

Weave polyphenylene sulfide single yarns having a fineness of 400 dtex and a twist factor of 475 as warps and wefts on a gripper loom to obtain a plain woven fabric having a warp density of 220 pieces/10 cm and a weft density of 180 pieces/10 cm, scour the obtained plain woven fabric at a temperature of 93°C and a speed of 20 m/min, then dry at 140°C with a cylinder dryer, sulfonate in 95% concentrated sulfuric acid at a temperature of 120°C for 10 min, wash and dry after the sulfonation to obtain a polyphenylene sulfide woven fabric having a thickness of 0.60 mm for a water electrolyser. The obtained polyphenylene sulfide woven fabric was tested through an X-ray photoelectron spectroscopy analyzer, and it was determined that the surface of the fiber of the polyphenylene sulfide woven fabric contained a hydrophilic group, the oxygen content of the surface of the fiber was 40% by weight, the content of the carbon-oxygen group in the hydrophilic group was 62% of the total number of the groups in the surface of the fiber, the carbon-oxygen group included 50% of carboxyl group, 15% of carbonyl group and 35% of aldehyde group, and the content of the sulfur-oxygen group was 8% of the total number of the groups in the surface of the fiber. The water absorption speed of the polyphenylene sulfide woven fabric after being treated in a 30% KOH solution at a temperature of 110°C was 7 s. The physical properties of a polyphenylene sulfide diaphragm for a water electrolyser according to the present invention were shown in Table 1 below.

Example 13

Twist six polyphenylene sulfide single yarns having a fineness of 500 dtex and a twist factor of 350 to form a polyphenylene sulfide yarn having a fineness of 3000 dtex and a twist factor of 320. Weave the yarns on a gripper loom to obtain a plain woven fabric having a warp density of 120 pieces/10 cm and a weft density of 90 pieces/10 cm, scour the obtained plain woven fabric at a temperature of 95°C and a speed of 20 m/min, then dry at 140°C with a cylinder dryer, sulfonate in 95% concentrated sulfuric acid at a temperature of 126°C for 12 min, wash and dry after the sulfonation to obtain a polyphenylene sulfide woven fabric having a thickness of 1.30 mm for a water electrolyser. The obtained polyphenylene sulfide woven fabric was tested through an X-ray photoelectron spectroscopy analyzer, and it was determined that the surface of the fiber of the polyphenylene sulfide woven fabric contained a hydrophilic group, the oxygen content of the surface of the fiber was 30% by weight, the content of the carbon-oxygen group in the hydrophilic group was 66% of the total number of the groups in the surface of the fiber, the carbon-oxygen group included 48% of carboxyl group, 17% of carbonyl group and 35% of aldehyde group, and the content of the sulfur-oxygen group was 10% of the total number of the groups in the surface of the fiber. The water absorption speed of the polyphenylene sulfide woven fabric after being treated in a 30% KOH solution at a temperature of 110°C was 6 s. The physical properties of a polyphenylene sulfide diaphragm for a water electrolyser according to the present invention were shown in Table 1 below.

Example 14

Twist six polyphenylene sulfide single yarns having a fineness of 500 dtex and a twist factor of 350 to form a polyphenylene sulfide yarn having a fineness of 3000 dtex and a twist factor of 320. Weave the yarns on a gripper loom to obtain a plain woven fabric having a warp density of 120 pieces/10 cm and a weft density of 90 pieces/10 cm, scour the obtained plain woven fabric at a temperature of 95°C and a speed of 20 m/min, then dry at 140°C with a cylinder dryer, sulfonate in 95% concentrated sulfuric acid at a temperature of 110°C for 11 min, wash and dry after the sulfonation to obtain a polyphenylene sulfide woven fabric having a thickness of 1.30 mm for a water electrolyser. The obtained polyphenylene sulfide woven fabric was tested through an X-ray photoelectron spectroscopy analyzer, and it was determined that the surface of the fiber of the polyphenylene sulfide woven fabric contained a hydrophilic group, the oxygen content of the surface of the fiber was 35% by weight, the content of the carbon-oxygen group in the hydrophilic group was 71% of the total number of the groups in the surface of the fiber, the carbon-oxygen group included 55% of carboxyl group, 7% of carbonyl group and 38% of aldehyde group, and the content of the sulfur-oxygen group was 12% of the total number of the groups in the surface of the fiber. The water absorption speed of the polyphenylene sulfide woven fabric after being treated in a 30% KOH solution at a temperature of 110°C was 8 s. The physical properties of a polyphenylene sulfide diaphragm for a water electrolyser according to the present invention were shown in Table 1 below.

Comparative Example 1

Twist four polyphenylene sulfide single yarns having a fineness of 300 dtex and a twist factor of 310 to form a polyphenylene sulfide yarn having a fineness of 1200 dtex and a twist factor of 435. Weave the twisted polyphenylene sulfide yarns as warps and wefts on a gripper loom to obtain a plain woven fabric having a warp density of 165 pieces/10 cm and a weft density of 94 pieces/10 cm, scour the obtained plain woven fabric at a temperature of 91°C and a speed of 30 m/min, then dry at 140°C with a cylinder dryer, and perform plasma processing at an intensity of 60 KW•s/m$^2$ to obtain a water electrolyser diaphragm having a thickness of 0.75 mm. The obtained diaphragm was tested through an X-ray photoelectron spectroscopy analyzer, and it was determined that the oxygen content of the surface of the diaphragm was 25% by weight, wherein the content of the carbon-oxygen group was 55% of the total number of the groups in the surface of the fiber, the carbon-oxygen group included 60% of carboxyl group, 10% of carbonyl group and 30% of aldehyde group, the content of the sulfur-oxygen group was 5% of the total number of the groups in the surface of the fiber, and the total content of the carbon-oxygen group and the sulfur-oxygen group was 60% of the total number of the groups in the surface of the fiber. The water absorption speed of the diaphragm after being treated in a 30% KOH solution at a temperature of 90°C was more than 300 s. The physical properties of the polyphenylene sulfide diaphragm for a water electrolyser were shown in Table 2 below.

Comparative Example 2

Twist seven polyphenylene sulfide single yarns having a fineness of 400 dtex and a twist factor of 475 to form a polyphenylene sulfide yarn having a fineness of 2800 dtex and a twist factor of 300. Weave the twisted polyphenylene sulfide yarns as warps and wefts on a gripper loom to obtain a plain woven fabric having a warp density of 105 pieces/10 cm and a weft density of 80 pieces/10 cm, scour the obtained plain woven fabric at a temperature of 94°C and a speed of 35 m/min, then dry at 140°C with a cylinder dryer, sulfonate in 95% concentrated sulfuric acid at a temperature of 70°C for 4 min, wash and dry after the sulfonation to finally obtain a polyphenylene sulfide woven fabric having a thickness of 1.30 mm for a water electrolyser. The obtained polyphenylene sulfide woven fabric was tested through an X-ray photoelectron spectroscopy analyzer, and it was determined that the surface of the fiber of the polyphenylene sulfide woven fabric contained a hydrophilic group, the oxygen content of the surface of the fiber was 12% by weight, wherein the content of the carbon-oxygen group was 46% of the total number of the groups in the surface of the fiber, the carbon-oxygen group included 50% of carboxyl group, 10% of carbonyl group and 40% of aldehyde group, the content of the sulfur-oxygen group was 4% of the total number of the groups in the surface of the fiber, and the total content of the carbon-oxygen group and the sulfur-oxygen group was 50% of the total number of the groups in the surface of the fiber. The water absorption speed of the polyphenylene sulfide woven fabric after being treated in a 30% KOH solution at a temperature of 100°C was more than 300 s. The physical properties of the polyphenylene sulfide diaphragm for a water electrolyser were shown in Table 2 below.

Comparative Example 3

Twist four polyphenylene sulfide single yarns having a fineness of 300 dtex and a twist factor of 310 to form a polyphenylene sulfide yarn having a fineness of 1200 dtex and a twist factor of 435. Weave the twisted polyphenylene sulfide yarns as warps and wefts on a gripper loom to obtain a plain woven fabric having a warp density of 165 pieces/10 cm and a weft density of 94 pieces/10 cm, scour the obtained plain woven fabric at a temperature of 94°C and a speed of 35 m/min, then dry at 140°C with a cylinder dryer, sulfonate in 95% concentrated sulfuric acid at a temperature of 160°C for 20 min, wash and dry after the sulfonation to finally obtain a polyphenylene sulfide woven fabric having a thickness of 0.70 mm for a water electrolyser. The obtained polyphenylene sulfide woven fabric was tested through an X-ray photoelectron spectroscopy analyzer, and it was determined that the surface of the fiber of the polyphenylene sulfide woven fabric contained a hydrophilic group, the oxygen content of the surface of the fiber was 60% by weight, wherein the content of the carbon-oxygen group was 74% of the total number of the groups in the surface of the fiber, the carbon-oxygen group included 60% of carboxyl group, 10% of carbonyl group and 30% of aldehyde group, the content of the sulfur-oxygen group was 16% of the total number of the groups in the surface of the fiber, and the total content of the carbon-oxygen group and the sulfur-oxygen group was 90% of the total number of the groups in the surface of the fiber. The water absorption speed of the polyphenylene sulfide woven fabric after being treated in a 30% KOH solution at a temperature of 100°C was 12 s. Since the treatment time of the woven fabric in the concentrated sulfuric acid was too long, the strength of the fabric was reduced. The physical properties of the polyphenylene sulfide diaphragm for a water electrolyser were shown in Table 2 below.

Comparative Example 4

Twist seven polyphenylene sulfide single yarns having a fineness of 400 dtex and a twist factor of 475 to form a polyphenylene sulfide yarn having a fineness of 2800 dtex and a twist factor of 300. Weave the twisted polyphenylene sulfide yarns as warps and wefts on a gripper loom to obtain a plain woven fabric having a warp density of 105 pieces/10 cm and a weft density of 80 pieces/10 cm, scour the obtained plain woven fabric at a temperature of 94°C and a speed of 35 m/min, then dry at 140°C with a cylinder dryer, and perform ultraviolet irradiation at a temperature of 50°C for 5 h to finally obtain a polyphenylene sulfide woven fabric having a thickness of 1.30 mm for a water electrolyser. The obtained polyphenylene sulfide woven fabric was tested through an X-ray photoelectron spectroscopy analyzer, and it was determined that the surface of the fiber of the polyphenylene sulfide woven fabric contained a hydrophilic group, the oxygen content of the surface of the fiber was 12% by weight, the content of the carbon-oxygen group in the hydrophilic group was 48% of the total number of the groups in the surface of the fiber, the content of the carbon-oxygen group and the hydroxy group was 50% of the total number of the groups in the surface of the fiber, the carbon-oxygen group included 40% of carboxyl group, 25% of carbonyl group and 35% of aldehyde group, the content of the sulfur-oxygen group was 1% of the total number of the groups in the surface of the fiber, and the content of the amino group was 1% of the total number of the groups in the surface of the fiber. The water absorption speed was more than 300 s after a treatment in a 30% KOH solution at a temperature of 90°C. The physical properties of the polyphenylene sulfide diaphragm for a water electrolyser were shown in Table 2 below.

Comparative Example 5

Twist four polyphenylene sulfide single yarns having a fineness of 300 dtex and a twist factor of 310 to form a polyphenylene sulfide yarn having a fineness of 1200 dtex and a twist factor of 435. Weave the twisted polyphenylene sulfide yarns as warps and wefts on a gripper loom to obtain a plain woven fabric having a warp density of 165 pieces/10 cm and a weft density of 94 pieces/10 cm, scour the obtained plain woven fabric at a temperature of 94°C and a speed of 35 m/min, then dry at 140°C with a cylinder dryer, and perform ultraviolet irradiation at a temperature of 100°C for 70 h to finally obtain a polyphenylene sulfide woven fabric having a thickness of 0.70 mm for a water electrolyser. The obtained polyphenylene sulfide woven fabric was tested through an X-ray photoelectron spectroscopy analyzer, and it was determined that the surface of the fiber of the polyphenylene sulfide woven fabric contained a hydrophilic group, the oxygen content of the surface of the fiber was 35% by weight, the content of the carbon-oxygen group in the hydrophilic group was 53% of the total number of the groups in the surface of the fiber, the content of the carbon-oxygen group and the hydroxy group was 58% of the total number of the groups in the surface of the fiber, the carbon-oxygen group included 35% of carboxyl group, 35% of carbonyl group and 30% of aldehyde group, the content of the sulfur-oxygen group was 15% of the total number of the groups in the surface of the fiber, and the content of the amino group was 12% of the total number of the groups in the surface of the fiber. The water absorption speed was 10 s after a treatment in a 30% KOH solution at a temperature of 90°C. Since the irradiation temperature of the woven fabric was too high and the irradiation time was too long, the strength of the fabric was reduced. The physical properties of the polyphenylene sulfide diaphragm for a water electrolyser were shown in Table 2 below.

Table 1

| Item | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|
| Fineness (dtex) | Warp | 1800 | 1200 | 4000 | 400 | 2500 | 5000 | 400 | 5000 | 1200 | 400 | 1800 | 400 | 3000 | 3000 |
| | Weft | 1800 | 1200 | 4000 | 400 | 2500 | 5000 | 400 | 5000 | 1200 | 400 | 1800 | 400 | 3000 | 3000 |
| Twist factor | | 320 | 435 | 300 | 475 | 316 | 268 | 475 | 268 | 435 | 475 | 320 | 475 | 320 | 320 |
| Density (pieces/ 10 cm) | Warp | 154 | 177 | 110 | 220 | 120 | 100 | 220 | 100 | 177 | 220 | 154 | 220 | 120 | 120 |
| | Weft | 106 | 122 | 70 | 180 | 90 | 60 | 180 | 60 | 122 | 180 | 106 | 180 | 90 | 90 |
| Thickness (mm) | | 0.90 | 0.77 | 1.50 | 0.60 | 1.20 | 2.00 | 0.60 | 2.00 | 0.77 | 0.60 | 0.90 | 0.60 | 1.30 | 1.30 |
| Gram weight ($g/m^2$) | | 556 | 426 | 800 | 360 | 620 | 960 | 360 | 960 | 426 | 360 | 556 | 360 | 650 | 650 |
| Oxygen content (% by weight) | | 26 | 33 | 40 | 35 | 32 | 27 | 33 | 20 | 41 | 46 | 55 | 40 | 30 | 35 |
| Content of carbon-oxygen group (%) | | 64 | 64 | 68 | 62 | 65 | 70 | 63 | 66 | 68 | 72 | 72 | 62 | 66 | 71 |
| Content of hydroxyl group (%) | | - | - | - | 7 | 9 | 8 | 8 | 4 | 7 | 10 | - | - | - | - |
| Content of carbon-oxygen group + hydroxyl group (%) (%) | | - | - | - | 69 | 74 | 78 | 71 | 70 | 75 | 82 | - | - | - | - |
| Content of sulfur-oxygen group (%) | | 10 | 8 | 9 | 10 | 8 | 6 | 7 | 6 | 6 | 6 | 15 | 8 | 10 | 12 |
| Content of amino group (%) | | - | - | - | 8 | 6 | 4 | 5 | 4 | 12 | 3 | - | - | - | - |
| Tensile breaking strength (n/5cm) | Warp | 3915 | 2984 | 3500 | 1950 | 3552 | 5582 | 2150 | 5700 | 2750 | 1870 | 3520 | 2200 | 3650 | 3320 |
| | Weft | 3218 | 2188 | 3045 | 1350 | 3018 | 5422 | 1290 | 5680 | 1920 | 1290 | 2960 | 1632 | 3210 | 2800 |
| Airtightness (mm $H_2O$) | | 700 | 600 | 680 | 747 | 650 | 600 | 700 | 550 | 580 | 620 | 630 | 545 | 660 | 650 |

(continued)

| Item | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|
| Water absorption speed after durability treatment (s) | 8 | 9 | 6 | 5 | 8 | 9 | 6 | 13 | 10 | 15 | 10 | 7 | 6 | 8 |
| Reduction rate of oxygen content after durability treatment (%) | 20 | 25 | 22 | 18 | 15 | 12 | 20 | 27 | 16 | 25 | 22 | 28 | 24 | 29 |
| Water absorption height (mm) | 225 | 210 | 226 | 275 | 270 | 258 | 265 | 200 | 278 | 265 | 210 | 180 | 200 | 165 |

Table 2

| Item | | Comparative Example 1 | Comparative Example 2 | Comparative Example 3 | Comparative Example 4 | Comparative Example 5 |
|---|---|---|---|---|---|---|
| Fineness (dtex) | Warp | 1200 | 2800 | 1200 | 2800 | 1200 |
| | Weft | 1200 | 2800 | 1200 | 2800 | 1200 |
| Twist factor | | 435 | 300 | 435 | 300 | 435 |
| Density (pieces/10 cm) | Warp | 165 | 105 | 165 | 105 | 165 |
| | Weft | 94 | 80 | 94 | 80 | 94 |
| Thickness (mm) | | 0.75 | 1.30 | 0.70 | 1.30 | 0.70 |
| Gram weight (g/m$^2$) | | 380 | 600 | 350 | 600 | 350 |
| Oxygen content (% by weight) | | 25 | 12 | 60 | 12 | 35 |
| Content of carbon-oxygen group (%) | | 55 | 46 | 74 | 48 | 53 |
| Content of hydroxyl group (%) | | - | - | - | 2 | 5 |
| Content of carbon-oxygen group + hydroxyl group (%) | | - | - | - | 50 | 58 |
| Content of sulfur-oxygen group (%) | | 5 | 4 | 16 | 1 | 15 |
| Content of amino group (%) | | - | - | - | 1 | 12 |
| Tensile breaking strength (N/ 5cm) | Warp | 2100 | 3400 | 1200 | 3400 | 950 |
| | Weft | 1980 | 3125 | 998 | 3125 | 778 |
| Airtightness (mm H$_2$O) | | 300 | 340 | 400 | 340 | 300 |
| Water absorption speed after durability treatment (s) | | >300 | >300 | 12 | >300 | 10 |
| Reduction rate of oxygen content after durability treatment (%) | | 50 | 32 | 30 | 43 | 20 |
| Water absorption height (mm) | | 98 | 102 | 170 | 110 | 272 |

**Claims**

1. A polyphenylene sulfide woven fabric for a water electrolyser, wherein

the surface of the fiber constituting the polyphenylene sulfide woven fabric contains hydrophilic groups, wherein the hydrophilic groups consist of a carbon-oxygen group, a hydroxyl group, a sulfur-oxygen group, and an amino group,
the oxygen content of the surface of the fiber is 15% by weight or more,
the carbon-oxygen group is at least one of a carboxyl group, a carbonyl group and an aldehyde group,
the content of the carbon-oxygen group is 62 to 72% of a total number of groups in the surface of the fiber, and

the content of the sulfur-oxygen group is 6 to 10% of the total number of the groups in the surface of the fiber, wherein the oxygen content of the surface of the fiber and the content of the carbon-oxygen group, the sulfur-oxygen group, the hydroxyl group and the amino group are measured according to the methods in the description, wherein the total content of the carbon-oxygen group and the hydroxyl group is 61 to 80% of the total number of the groups in the surface of the fiber, and the content of the amino group is 2 to 10% of the total number of the groups in the surface of the fiber.

2. The polyphenylene sulfide woven fabric for a water electrolyser according to claim 1, wherein the total content of the carbon-oxygen group and the sulfur-oxygen group is 72 to 85% of the total number of the groups in the surface of the fiber.

3. The polyphenylene sulfide woven fabric for a water electrolyser according to claim 1, wherein the fineness of the warp or weft constituting the polyphenylene sulfide woven fabric is 280 to 3000 dtex.

4. The polyphenylene sulfide woven fabric for a water electrolyser according to claim 1 or 3, wherein the density of the warp constituting the polyphenylene sulfide woven fabric is 100 to 220 pieces/10 cm, and the density of the weft is 60 to 180 pieces/10 cm, measured according to the method in the description.

5. The polyphenylene sulfide woven fabric for a water electrolyser according to claim 1 or 3, wherein the thickness of the polyphenylene sulfide woven fabric is 0.50 to 2.00 mm, measured according to the method in the description.

6. The polyphenylene sulfide woven fabric for a water electrolyser according to claim 1 or 3, wherein the gram weight of the polyphenylene sulfide woven fabric is 300 to 1000 $g/m^2$, measured according to the method in the description.

7. A manufacturing method of the polyphenylene sulfide woven fabric for a water electrolyser according to claim 1, comprising the steps of: weaving polyphenylene sulfide yarns having a fineness of 280 to 5000 dtex as warps and wefts on a gripper loom or a heavy shaft loom to obtain a gray fabric; scouring the obtained gray fabric at a temperature of 90 to 95°C and a speed of 20 to 40 m/min, then drying at a temperature of 130 to 150°C with a cylinder dryer, and performing ultraviolet irradiation.

8. The manufacturing method of the polyphenylene sulfide woven fabric for a water electrolyser according to claim 7, wherein the dried polyphenylene sulfide woven fabric is irradiated under ultraviolet rays at a temperature of 60 to 90°C for 10 to 60 hours.

**Patentansprüche**

1. Polyphenylensulfid-Gewebe für einen Wasser-Elektrolyseur, wobei die Oberfläche der Faser, aus der das Polyphenylensulfid-Gewebe besteht, hydrophile Gruppen enthält, wobei die hydrophilen Gruppen aus einer Kohlenstoff-Sauerstoff-Gruppe, einer Hydroxylgruppe, einer Schwefel-Sauerstoff-Gruppe und einer Aminogruppe bestehen,

wobei der Sauerstoffgehalt der Oberfläche der Faser 15 Gew.-% oder mehr beträgt,
wobei die Kohlenstoff-Sauerstoff-Gruppe zumindest eine aus einer Carboxylgruppe, einer Carbonylgruppe und einer Aldehydgruppe ist,
wobei der Gehalt der Kohlenstoff-Sauerstoff-Gruppe 62 % bis 72 % der Gesamtanzahl an Gruppen in der Oberfläche der Faser beträgt und
wobei der Gehalt der Schwefel-Sauerstoff-Gruppe 6 % bis 10 % der Gesamtanzahl an Gruppen in der Oberfläche der Faser beträgt,
wobei der Sauerstoffgehalt der Oberfläche der Faser und der Gehalt der Kohlenstoff-Sauerstoff-Gruppe, der Schwefel-Sauerstoff-Gruppe, der Hydroxylgruppe und der Aminogruppe gemäß den Verfahren in der Beschreibung gemessen werden,
wobei der Gesamtgehalt der Kohlenstoff-Sauerstoff-Gruppe und der Hydroxylgruppe 61 % bis 80 % der Gesamtanzahl an Gruppen in der Oberfläche der Faser beträgt und der Gehalt der Aminogruppe 2 % bis 10 % der Gesamtanzahl an Gruppen in der Oberfläche der Faser beträgt.

2. Polyphenylensulfid-Gewebe für einen Wasser-Elektrolyseur nach Anspruch 1, wobei der Gesamtgehalt der Kohlenstoff-Sauerstoff-Gruppe und der Schwefel-Sauerstoff-Gruppe 72 % bis 85 % der Gesamtanzahl an Gruppen in der Oberfläche der Faser beträgt.

**EP 3 447 177 B1**

3. Polyphenylensulfid-Gewebe für einen Wasser-Elektrolyseur nach Anspruch 1, wobei die Feinheit von Kette oder Schuss, aus denen das Polyphenylensulfid-Gewebe besteht, 280 bis 3000 dtex beträgt.

4. Polyphenylensulfid-Gewebe für einen Wasser-Elektrolyseur nach Anspruch 1 oder 3, wobei die Dichte der Kette, aus der das Polyphenylensulfid-Gewebe besteht, 100 bis 220 Stück/10 cm beträgt und die Dichte des Schusses, aus dem das Polyphenylensulfid-Gewebe besteht, 60 bis 180 Stück/10 cm beträgt, gemessen gemäß dem Verfahren in der Beschreibung.

5. Polyphenylensulfid-Gewebe für einen Wasser-Elektrolyseur nach Anspruch 1 oder 3, wobei die Dicke des Polyphenylensulfid-Gewebes 0,50 bis 2,00 mm beträgt, gemessen gemäß dem Verfahren in der Beschreibung.

6. Polyphenylensulfid-Gewebe für einen Wasser-Elektrolyseur nach Anspruch 1 oder 3, wobei das Grammgewicht des Polyphenylensulfid-Gewebes 300 bis 1000 g/m$^2$ beträgt, gemessen gemäß dem Verfahren in der Beschreibung.

7. Herstellungsverfahren für ein Polyphenylensulfid-Gewebe für einen Wasser-Elektrolyseur nach Anspruch 1, das die folgenden Schritte umfasst: das Weben von Polyphenylensulfid-Garnen mit einer Feinheit von 280 bis 5000 dtex als Schuss und Kette auf einer Greiferwebmaschine oder einer schweren Schaftwebmaschine, um ein Rohgewebe zu erhalten; das Waschen des erhaltenen Rohgewebes bei einer Temperatur von 90 °C bis 95 °C und mit einer Geschwindigkeit von 20 bis 40 m/min, das anschließende Trocknen bei einer Temperatur von 130 °C bis 150 °C mit einem Zylindertrockner und das Durchführen von UV-Bestrahlung.

8. Herstellungsverfahren für ein Polyphenylensulfid-Gewebe für einen Wasser-Elektrolyseur nach Anspruch 7, wobei das getrocknete Polyphenylensulfid-Gewebe bei einer Temperatur von 60 °C bis 90 °C 10 bis 60 h lang mit UV-Strahlung bestrahlt wird.

**Revendications**

1. Tissu tissé de sulfure de polyphénylène pour un électrolyseur à eau, dans lequel

   la surface de la fibre constituant le tissu tissé de sulfure de polyphénylène contient des groupes hydrophiles, dans lequel les groupes hydrophiles sont constitués d'un groupe carbone-oxygène, d'un groupe hydroxyle, d'un groupe soufre-oxygène et d'un groupe amino,
   la teneur en oxygène de la surface de la fibre est de 15 % en poids ou plus,
   le groupe carbone-oxygène est au moins un parmi un groupe carboxyle, un groupe carbonyle et un groupe aldéhyde,
   la teneur du groupe carbone-oxygène est de 62 à 72 % d'un nombre total de groupes à la surface de la fibre, et la teneur du groupe soufre-oxygène est de 6 à 10 % du nombre total des groupes à la surface de la fibre,
   dans lequel la teneur en oxygène de la surface de la fibre et la teneur en groupe carbone-oxygène, en groupe soufre-oxygène, en groupe hydroxyle et en groupe amino sont mesurées selon les procédés de la description,
   dans lequel la teneur totale du groupe carbone-oxygène et du groupe hydroxyle est de 61 à 80 % du nombre total des groupes à la surface de la fibre, et la teneur du groupe amino est de 2 à 10 % du nombre total des groupes à la surface de la fibre.

2. Tissu tissé de sulfure de polyphénylène pour un électrolyseur à eau selon la revendication 1, dans lequel la teneur totale du groupe carbone-oxygène et du groupe soufre-oxygène est de 72 à 85 % du nombre total des groupes à la surface de la fibre.

3. Tissu tissé de sulfure de polyphénylène pour un électrolyseur à eau selon la revendication 1, dans lequel la finesse de la chaîne ou de la trame constituant le tissu tissé de sulfure de polyphénylène est de 280 à 3000 dtex.

4. Tissu tissé de sulfure de polyphénylène pour un électrolyseur à eau selon la revendication 1 ou 3, dans lequel la densité de la chaîne constituant le tissu tissé de sulfure de polyphénylène est de 100 à 220 pièces/10 cm, et la densité de la trame est de 60 à 180 pièces/10 cm, mesurées selon le procédé de la description.

5. Tissu tissé de sulfure de polyphénylène pour un électrolyseur à eau selon la revendication 1 ou 3, dans lequel l'épaisseur du tissu tissé de sulfure de polyphénylène est de 0,50 à 2,00 mm, mesurée selon le procédé de la description.

6. Tissu tissé de sulfure de polyphénylène pour un électrolyseur à eau selon la revendication 1 ou 3, dans lequel le poids en grammes du tissu tissé de sulfure de polyphénylène est de 300 à 1000 g/m$^2$, mesuré selon le procédé de la description.

7. Procédé de fabrication du tissu tissé de sulfure de polyphénylène pour un électrolyseur à eau selon la revendication 1, comprenant les étapes consistant à : tisser des fils de sulfure de polyphénylène ayant une finesse de 280 à 5000 dtex sous forme de chaînes et de trames sur un métier à pinces ou un métier à manche lourd pour obtenir un tissu écru ; laver le tissu écru obtenu à une température de 90 à 95°C et à une vitesse de 20 à 40 m/min, puis sécher à une température de 130 à 150°C avec un séchoir à cylindre, et effectuer un rayonnement ultraviolet.

8. Procédé de fabrication du tissu tissé de sulfure de polyphénylène pour un électrolyseur à eau selon la revendication 7, dans lequel le tissu tissé de sulfure de polyphénylène séché est irradié sous des rayons ultraviolets à une température de 60 à 90°C pendant 10 à 60 heures.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103938337 A
- CN 101372752 A
- CN 104746202 A
- US 20140255619 A